# EUROPÄISCHE PATENTSCHRIFT

(11) **EP 2 625 144 B1**
(45) Veröffentlichungstag und Bekanntmachung des Hinweises auf die Patenterteilung: **13.12.2017**
(21) Anmeldenummer: 11748569.8
(22) Anmeldetag: 27.07.2011
(51) Int. Cl.: C02F 1/32, F15D 1/02

(54) **STRÖMUNGSGLEICHRICHTER FÜR GESCHLOSSENE ROHRLEITUNGEN**
FLOW STRAIGHTENER FOR CLOSED PIPELINES
REDRESSEUR D'ÉCOULEMENT POUR CANALISATIONS FERMÉES

(30) Priorität: 08.10.2010 DE 102010047782
(43) Veröffentlichungstag der Anmeldung: 14.08.2013
(73) Patentinhaber: Xylem IP Holdings LLC, White Plains, NY 10604 (US)
(72) Erfinder: ANTON, Hans-Joachim, 33613 Bielefeld (DE); RAPAKA, Madhukar, 506001 Warangal Andhra Prasesh (IN)
(74) Vertreter: Lenzing Gerber Stute
(86) Internationale Anmeldenummer: PCT/EP2011/003759
(87) Internationale Veröffentlichungsnummer: WO 2012/045378

(56) Entgegenhaltungen:
- EP-A1- 1 837 309
- WO-A1-2004/048274
- DE-A1- 10 101 816
- JP-A- 9 276 859
- US-A1- 2002 117 631
- IRANPOUR R ET AL: "Hydraulic Effects on Ultraviolet Disinfection: Modification of Reactor Design", RESEARCH JOURNAL OF THE WATER POLLUTION CONTROL FEDERATION, WATER POLLUTION CONTROL FEDERATION, ALEXANDRIA, VA, US, Bd. 71, Nr. 1, 1. Januar 1999 (1999-01-01) , Seiten 114-118, XP002223031, ISSN: 1047-7624

## Beschreibung

Die vorliegende Erfindung betrifft einen Strömungsgleichrichter für geschlossene Rohrleitungen mit den Merkmalen des Oberbegriffs des Anspruchs 1.

Zu verschiedenen Zwecken wird die UV-Bestrahlung von strömenden Flüssigkeiten vorgenommen, so beispielsweise zur Desinfektion von Trinkwasser und Abwasser sowie zum Auslösen von chemischen Reaktionen, die durch die UV-Strahlung ermöglicht werden. Dabei ist für die gewünschte Wirkung der UV-Strahlung in der Flüssigkeit stets die UV-Dosis ausschlaggebend, die jedes Volumenelement erhält. Bei Desinfektionsanwendungen sind die in dem Wasser enthaltenen Mikroorganismen nur dann zuverlässig desinfiziert, wenn sie mit einer bestimmten Mindestdosis beaufschlagt werden. Deshalb ist es erforderlich, die Strahlungsleistung in der Anlage so einzustellen, dass das Flüssigkeitsvolumen mit der kleinsten Verweildauer oder der geringsten Bestrahlungsintensität sicher die erforderliche Minimaldosis an UV-Strahlung erhält.

Dies bedeutet, dass bei einer stark inhomogenen Strömung innerhalb des UV-Reaktors die langsam strömenden Volumenelemente eine zu hohe Dosis empfangen, also in diesem Bereich zu viel Energie aufgewendet wird, wenn die am schnellsten strömenden Volumenelemente sicher eine Dosis über der erforderlichen Minimaldosis erhalten sollen. Ein erheblicher Teil der Betriebskosten einer solchen Anlage zur Desinfektion von Trinkwasser entsteht durch den Stromverbrauch der eingesetzten UV-Strahler. Man ist bestrebt, die Strömung durch einen solchen UV-Reaktor möglichst gleichmäßig zu gestalten, so dass alle Volumenelemente etwa die gleiche Strahlungsdosis empfangen.

Zu diesem Zweck werden verschiedene Lösungen vorgeschlagen. Es gibt Anlagen mit langgestreckten UV-Strahlern von der Bauart der Quecksilberniederdruckstrahler, die parallel zur Strömung in dem UV-Reaktor angeordnet sind. Bei diesen Anlagen wird beispielsweise durch Prallplatten die Strahlung so verwirbelt, dass alle Flüssigkeitsvolumina in die Nähe der Strahler kommen und so eine im Wesentlichen gleichförmige Bestrahlung der gesamten strömenden Flüssigkeit erzielt wird. Diese Prallplatten erhöhen den Strömungswiderstand der Anlage und verringern den möglichen Flüssigkeitsdurchsatz. Eine solche Vorrichtung ist beispielsweise in der Druckschrift US 5,352,359 dargestellt. In der Offenlegungsschrift DE 101 01 816 A1 wird ein Flachdiffusor zur Änderung des Strömungsquerschnittes in einem Strömungskanal beschrieben, der sich insbesondere zur Verwendung im Zu- und Ablaufbereich von UV-Desinfektionskammern eignet.

Ein anderer Ansatz besteht in der Vergleichmäßigung der Strömung innerhalb des UV-Reaktors. Hierzu werden sogenannte statische Mischer eingesetzt, die die Geschwindigkeitsverteilung oder das Geschwindigkeitsprofil innerhalb der Strömung Vergleichmäßigen. Eine solche technische Lösung ist in der Patentschrift US 7,018,544 B2 dargestellt. Auch diese Lösung erhöht den Strömungswiderstand. Sie ist außerdem abhängig von einer etwa in gerader Linie eintretenden Strömung mit einem rotationssymmetrischen Geschwindigkeitsprofil.

Es ist deshalb Aufgabe der vorliegenden Erfindung, einen Strömungsgleichrichter zu schaffen, der auch bei einer eintretenden Strömung mit einem nicht rotationssymmetrischen Geschwindigkeitsprofil eine Homogenisierung der Geschwindigkeitsverteilung innerhalb der Strömung erzielt und der außerdem einen geringen Staudruck erzeugt.

Diese Aufgabe wird von einem Strömungsgleichrichter mit den Merkmalen des Anspruchs 1 gelöst.

Weil in Strömungsrichtung vor dem UV-Reaktor ein Zulaufkonus vorgesehen ist, der als Teil der Wandung des Kanals den Querschnitt des Kanals von einem einlaufenden Rohrleitungsquerschnitt auf einen Querschnitt des Reaktors vergrößert und weil in dem Zulaufkonus wenigstens ein inneres Leitelement und ein äußeres Leitelement angeordnet sind, wobei das innere Leitelement ein im Wesentlichen kreiszylindrisches Rohr und das äußere Leitelement im Wesentlichen parallel zu der Außenwand verläuft und in einem Abstand zu der Außenwand angeordnet ist, wird eine gleichmäßige Geschwindigkeitsverteilung im Bereich des UV-Reaktors stromabwärts des Strömungsgleichrichters erzielt Dabei kann das äußere Leitelement einen kreisförmigen Querschnitt aufweisen. Es kann auch vorgesehen sein, das äußere Leitelement an die Form des Zulaufkonus anzupassen, also insbesondere einen quadratischen oder rechteckigen Querschnitt mit abgerundeten Ecken oder mit rechtwinkligen Ecken vorzusehen.

Bei einer bevorzugten Ausführungsform ist zwischen dem ersten Leitelement und dem zweiten Leitelement noch ein drittes Leitelement angeordnet. Vorzugsweise ist die Wandung des dritten Leitelements bezüglich der Symmetrieachse der Anordnung in einem Winkel ausgerichtet, der zwischen dem ersten Leitelement und dem zweiten Leitelement liegt. Vorteilhaft ist eine Anordnung, bei der das erste Leitelement in Axialrichtung der Vorrichtung, die der Strömungsrichtung des Wassers entspricht, kürzer ist als das zweite Leitelement. Dabei sind vorzugsweise die stromaufwärts liegenden Enden der Leitelemente in einer Ebene angeordnet, während die stromabwärts liegenden Enden der Leitelemente in unterschiedlichen Ebenen liegen. Es kann auch vorgesehen sein, die axiale Erstreckung der Leitelemente gleich lang zu wählen.

Nachfolgend werden Ausführungsbeispiele der vorliegenden Erfindung anhand der Zeichnung beschrieben. Es zeigen:
- Figur 1:: Eine schematische Darstellung eine UV-Reaktors, eingebaut in einen Bestrahlungskanal mit einer eingangsseitigen Umlenkung;
- Figur 2:: Einen UV-Reaktor ähnlich Figur 1 mit einem geraden Einlauf;
- Figur 3:: Den Strömungsgleichrichter aus Figur 2 in einer perspektivischen Darstellung;
- Figur 4:: Eine Variante des Strömungsgleichrichters aus Figur 2 mit einem runden äußeren Leitelement;
- Figur 5:: Einen Strömungsgleichrichter mit drei Elementen in einer ersten Variante;
- Figur 6:: Einen Strömungsgleichrichter mit drei Leitelementen in einer zweiten Variante;
- Figur 7:: Einen Strömungsgleichrichter mit drei Leitelementen in einer dritten Variante;
- Figur 8:: Einen Strömungsgleichrichter mit drei Leitelementen in einer vierten Variante;
- Figur 9:: Einen Strömungsgleichrichter mit zwei Leitelementen in einer Seitenansicht und einer Stirnansicht;
- Figur 10:: Einen Strömungsgleichrichter mit drei Leitelementen in einer Seitenansicht und einer Stirnansicht;
- Figur 11:: Einen Strömungsgleichrichter mit drei Leitelementen in einer anderen Ausführungsform in einer Seitenansicht und einer Stirnansicht;
- Figur 12:: Einen Strömungsgleichrichter mit drei Leitelementen in einer weiteren Ausführungsform, in einer Seitenansicht und einer Stirnansicht;
- Figur 13:: Einen Strömungsgleichrichter mit vier Leitelementen in einer Seitenansicht und einer Stirnansicht;
- Figur 14:: eine nicht erfindungsgemäße Ausführungsform;
- Figur 15:: eine nicht erfindungsgemäße Ausführungsform;
- Figur 16:: eine nicht erfindungsgemäße Ausführungsform;
- Figur 17:: eine nicht erfindungsgemäße Ausführungsform;
- Figur 18:: eine nicht erfindungsgemäße Ausführungsform;
- Figur 19:: nicht erfindungsgemäße Ausführungsform;
- Figur 20:: nicht erfindungsgemäße Ausführungsform;
- Figur 21:: nicht erfindungsgemäße Ausführungsform.

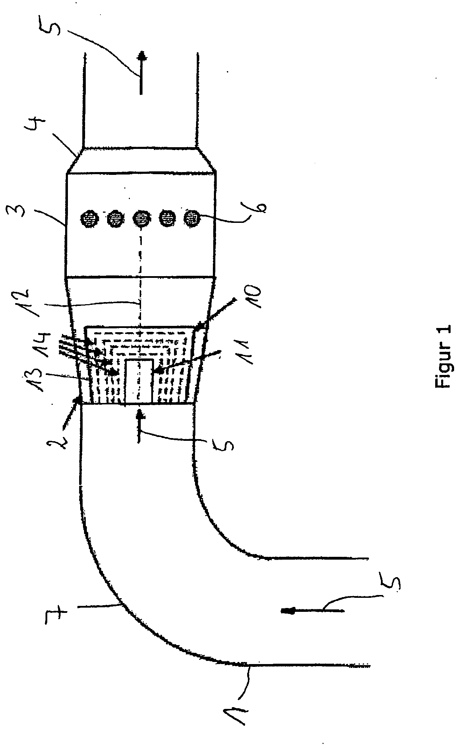

In der Figur 1 ist ein Kanal 1 mit einem Zulaufkonus 2, einem UV-Reaktor 3 und einem Auslaufkonus 4 in einer schematischen Darstellung veranschaulicht. Der Kanal 1 ist in üblicherweise als Edelstahlrohr mit rechteckigem oder runden Querschnitt geschlossen ausgeführt. Die Strömungsrichtung verläuft in Richtung von Strömungspfeilen 5.

In dem UV-Reaktor sind mehrere UV-Strahler 6 angeordnet. Die UV-Strahler 6 sind in Form von langgestreckten Quecksilbermitteldruckstrahlern oder Quecksilberniederdruckstrahlern senkrecht zur Zeichenebene angeordnet und durchsetzen den Strömungskanal in dem UV-Reaktor 3 quer zur Strömungsrichtung 5. Der Kanal 1 weist stromaufwärts des Zulaufkonus 2 einen Rohrbogen 7 auf, der die Strömungsrichtung 5 um 90° umlenkt. Am Eintritt des Zulaufkonus 2 weist die Strömung des Wassers in dem Kanal 1 in Folge diese Umlenkung ein komplexes Geschwindigkeitsprofil auf, das Bereichte mit hoher Strömungsgeschwindigkeit und Bereiche mit sehr geringer Strömungsgeschwindigkeit umfasst. In dem Zulaufkonus 2 ist zur Angleichung der Geschwindigkeiten der verschiedenen Strömungspfade ein Strömungsgleichrichter angeordnet, der insgesamt mit 10 bezeichnet ist. Der Strömungsgleichrichter 10 umfasst ein inneres erstes Leitelement 11, das als zylindrisches Rohr mit in Strömungsrichtung 5 konstanten Durchmesser ausgebildet ist und das zu einer Symmetrieachse 12 symmetrisch angeordnet ist. Der Strömungsgleichrichter 10 umfasst weiter ein zweites äußeres Leitelement 13. Das Leitelement 13 ist radial zwischen dem ersten Leitelement 11 und der Wandung des Zulaufkonus 2 angeordnet. Das zweite Leitelement 13 ist als konisches rohrförmiges Leitelement ausgebildet und weist stromaufwärts, in der Figur 1 also dem Bogen 7 zugewandt, einen kleineren Öffnungsquerschnitt auf als stromabwärts dem UV-Reaktor 3 zugewandt. Das zweite Leitelement 13 kann als rundes, kegelstumpfförmiges Rohr ausgebildet sein. Es kann auch als vierseitiger Pyramidenstumpf ausgebildet sein. Die Wandung des zweiten Leitelements, welches üblicherweise aus Edelstahlblech gefertigt wird, verläuft im Wesentlichen parallel zu der Wandung des Zulaufkonus 2.

In Richtung der Symmetrieachse 12 sind die stromaufwärtigen Enden des ersten Leitelements 11 und des zweiten Leitelements 13 in der gleichen Ebene angeordnet, die mit der Ebene des Eingangs des Zulaufkonus 2 übereinstimmt. In Richtung der Symmetrieachse 12 stromabwärts ist das erste Leitelement 11 kürzer als das zweite Leitelement 13. Das zweite Leitelement 13 ist wiederum kürzer als der Zulaufkonus 2, so dass sich zwischen dem stromabwärtigen Ende des zweiten Leitelements 13 und dem Eingang des Reaktors 3 ein Freiraum befindet.

Zwischen dem ersten Leitelement 11 und dem zweiten Leitelement 13 können weitere Leitelemente in Form von kegelstumpfförmigen oder pyramidenstumpfförmigen Rohren angeordnet sein, die in der Figur 1 gestrichelt dargestellt und mit der Bezugsziffer 14 bezeichnet sind. Die dritten Leitelemente 14 sind dann mit sich in Strömungsrichtung 5 erweiternden freien Querschnitten ausgebildet, wobei der Winkel der Wandung gegenüber der Symmetrieachse 12 zwischen 0 und dem Winkel des zweiten Leitelements 13 liegt.

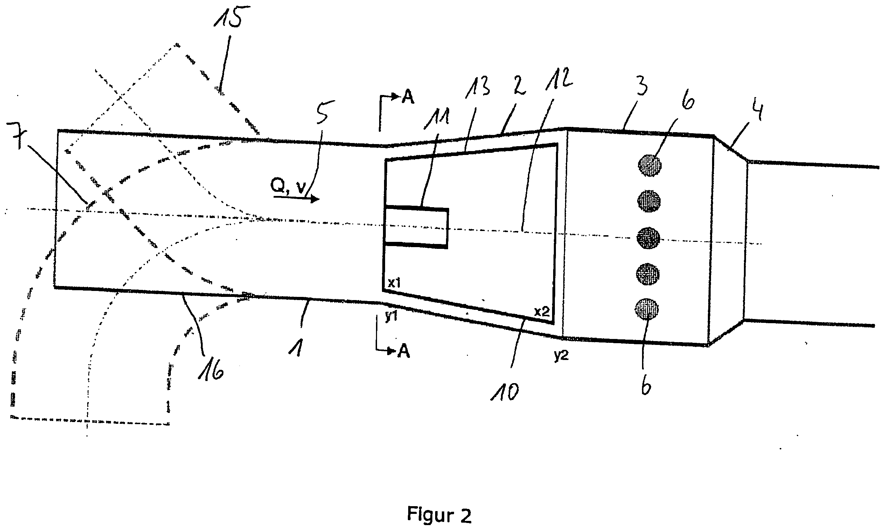

Die Figur 2 zeigt eine Anordnung entsprechend Figur 1 mit verschiedenen Optionen für den Kanal 1 stromaufwärts des Strömungsgleichrichters 10. In dieser Figur ist der Rohrbogen 7, der eine Umlenkung um 90° bewirkt, mit gestrichelten Linien dargestellt. Eine andere Ausführungsform ist ein Rohrbogen 15, der eine Umlenkung um etwa 45° erlaubt und der ebenfalls mit gestrichelten Linien dargestellt ist. Eine bevorzugte Ausführung sieht einen Rohranschluss 16, der ohne Winkeländerung auf den Zulaufkonus 2 zu führt. Der Strömungsgleichrichter 10, der in dem Zulaufkonus 2 angeordnet ist, bewirkt aber auch bei den Ausführungen mit einem Rohrbogen 7 oder einem Rohrbogen 15 eine im Wesentlichen gleichförmige Anströmung der Strahler 6 in dem UV-Reaktor 3.

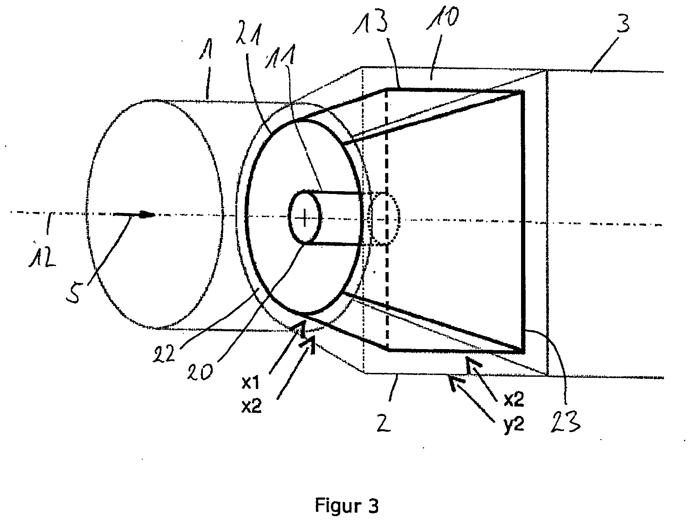

In der Figur 3 ist der Bereich des Zulaufkonus 2 in einer perspektivischen Darstellung mit Blickrichtung schräg auf die stromaufwärtige Seite des Strömungsgleichrichters 10 dargestellt. Gleiche Bauelemente sind mit gleichen Bezugsziffern versehen. In dieser perspektivischen Darstellung ist erkennbar, dass die stromaufwärtige Seite des Strömungsgleichrichters 10 einen inneren, kreisförmigen Öffnungsquerschnitt 20 des ersten Leitelements 11 und einen ebenso kreisförmigen freien Querschnitt 21 des zweiten Leitelements 13 aufweist. Die beiden Öffnungsquerschnitte 20 und 21 sind konzentrisch zueinander angeordnet. Außerhalb des größeren Öffnungsquerschnitts 21 befindet sich zwischen dem zweiten Leitelement 13 und dem Zulaufkonus 2 ein Ringspalt 22, der ebenfalls frei von der Strömung 5 durchsetzt werden kann. In Strömungsrichtung stromabwärts des Öffnungsquerschnitts 20 ist das erste Leitelement 11 mit konstantem Durchmesser rohrförmig ausgebildet. Das zweite Leitelement 13 ist stromabwärts des Öffnungsquerschnitts 21 mit zunehmenden freien Querschnitt ausgestattet, wobei sich die zunächst kreisrunde Querschnittsgestalt allmählich in eine quadratische Querschnittsgestalt ändert, die der Kontur des ebenfalls mit quadratischem Querschnitt versehenen Zulaufkonus 2 in einem Abstand folgt.

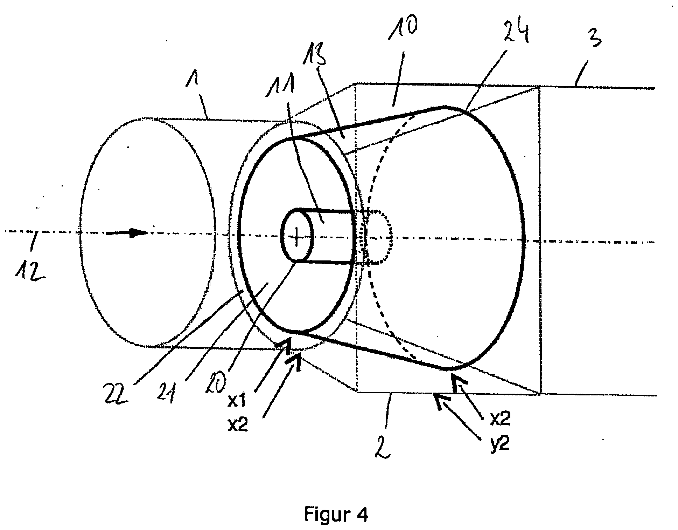

Die Figur 4 zeigt eine andere Variante des in dem Zulaufkonus 2 angeordneten Strömungsgleichrichters 10. Die Darstellung entspricht derjenigen aus Figur 32. Im Unterschied zu Figur 3, wo sich der Querschnitt des zweiten Leitelements 13 von einem kreisrunden Öffnungsquerschnitt 21 an dem stromaufwärtigen Ende zu einem quadratischen Öffnungsquerschnitt am stromabwärtigen Ende ändert, ist das zweite Leitelement 13 bei dieser Ausführung kegelstumpfförmig ausgeführt. Die Mantelfläche erweitert sich von einem kreisrunden Öffnungsquerschnitt 21 hin zu einem größeren, ebenfalls kreisrunden Querschnitt 24, der am stromabwärts liegenden Ende des zweiten Leitelements 13 erreicht wird. Der innere Querschnitt des zweiten Leitelements 13 bleibt über den gesamten Verlauf kreisförmig. Durch diese Ausbildung ergibt sich zwischen dem zweiten Leitelement 13 und der Innenwand des Zulaufkonus 2 ein Spalt, der über den Umfang keine konstante Spaltbreite aufweist. Dies ist für die Funktion der Vorrichtung kein wesentlicher Nachteil.

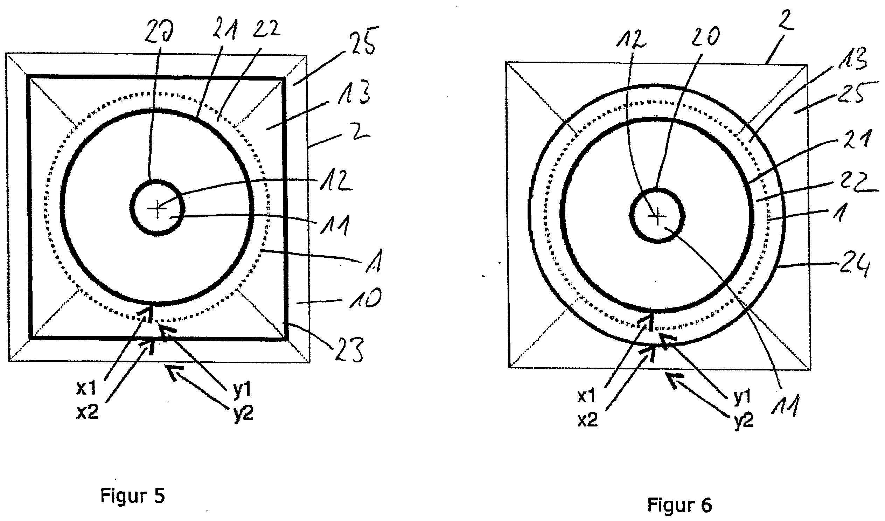

Die Figur 5 zeigt eine Stirnansicht der stromabwärtigen Seite des Strömungsgleichrichters aus Figur 3. Das erste Leitelement 11 ist in dieser Richtung nur als Kreis dargestellt, da über die Längserstreckung in Richtung der Achse 12 der Querschnitt konstant ist. Das zweite Leitelement 13 weist, in dieser Darstellung gut erkennbar, den Öffnungsquerschnitt 21 in der Eintrittsseite auf, der kreisrund ist und im Durchmesser kleiner ist als der Querschnitt des Kanals 1. Zwischen dem Öffnungsquerschnitt 21 und dem Kanal 1 ist der Ringspalt 22 gebildet. Das zweite Leitelement 13 weist stromabwärtig den quadratischen Öffnungsquerschnitt 23 auf, der ebenfalls einen Abstand 25 zu der äußeren Wandung des Zulaufkonus 2 darstellt.

Die Figur 6 zeigt die entsprechende Stirnansicht des Strömungsgleichrichters 10 aus Figur 4. Wiederum ist das erste Leitelement 11 mit konstantem Durchmesser in Richtung der Achse 12 versehen und stellt den Öffnungsquerschnitt 20 dar. Das zweite Leitelement 13 ist mit dem stromaufwärtigen Öffnungsquerschnitt 21 und dem stromabwärtigen, größeren Öffnungsquerschnitt 24 versehen. An der Eingangsseite des Zulaufkonus 2 ist zwischen dem zweiten Leitelement 13 und der Wandung des Zulaufkonus 2 der Ringspalt 22 gebildet. An der stromabwärtigen Seite ist ein Spalt 25 zwischen dem zweiten Leitelement 13 und der Wandung des Zulaufkonus 2 ausgebildet, der über den Umfang der Vorrichtung nicht eine konstante Breite aufweist.

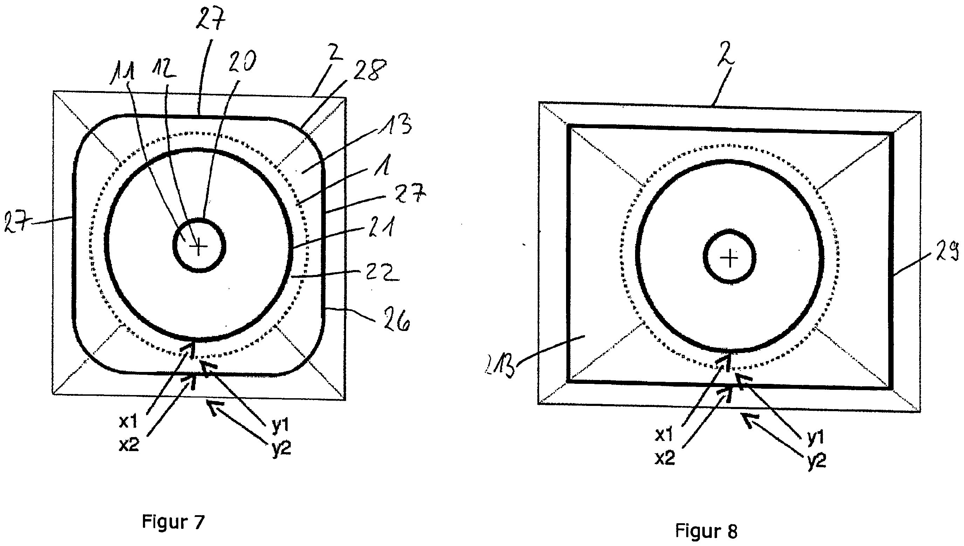

Die Figur 7 zeigt eine Variante des Strömungsgleichrichters 10 aus den Figuren 5 und 6, die einen Kompromiss zwischen den beiden Varianten aus Figur 5 und 6 darstellt. Während in der Figur 5 der Spalt 25 zwischen dem zweiten Leitelement 13 und der Wandung des Zulaufkonus 2 über den Umfang eine konstante lichte Weite aufweist, ist der Spalt zwischen dem ersten Leitelement 11 und dem zweiten Leitelement 13 in Umfangsrichtung nicht mit einer konstanten lichten Weite versehen. Andererseits ist bei der Ausführung nach Figur 6 der Spalt zwischen dem ersten Leitelement 11 und dem zweiten Leitelement 13 über die Umfangsrichtung konstant, während der äußere Spalt 25 zwischen dem zweiten Leitelement 13 und der Wandung des Zulaufkonus 2 in Umfangsrichtung nicht konstant breit ist. In der Figur 7 wird dieser Effekt, der nur bei dem Übergang von runden Rohrleitungen in rechteckige oder quadratische Reaktorgehäuse auftritt, durch einen Kompromiss optimiert. Die Anordnung ist an der Einströmseite stromaufwärts des Zulaufkonus 2 identisch zu den Lösungen aus Figur 5 und Figur 6. In stromabwärtiger Richtung erweitert sich das zweite Leitelement 13 im Querschnitt zu einem Austrittsquerschnitt 26, der gerade Wandungsabschnitte 27 parallel zu der Wandung des Zulaufkonus 2 aufweist, und der an den Eckbereichen des Zulaufkonus 2 zwischen den geraden Wandabschnitten 27 abgerundete Bereiche 28 aufweist. Diese Querschnittsgestaltung bewirkt, dass der innere Spalte ebenso wie der äußere Spalt in Umfangsrichtung keine konstante Weite aufweist, dass die Unterschiede über den Umfang jedoch minimiert sind.

Die Figur 8 zeigt eine Darstellung entsprechend Figur 5, wobei der Zulaufkonus 2 nicht mit einem quadratischen Querschnitt, sondern mit einem rechteckigen Querschnitt zum Anschluss an einen entsprechend rechteckigen Reaktor 3 ausgebildet ist. Bei dieser Ausführungsform erweitert sich der freie Querschnitt des zweiten Leitelements 13 von einem runden Eintrittsquerschnitt zu einem rechteckigen, größeren Austrittsquerschnitt 29.

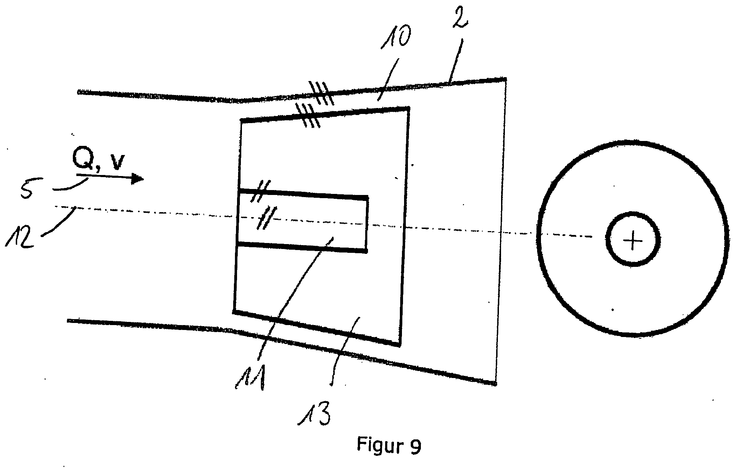

In den Figuren 9 - 13 sind verschiedene Konfigurationen von Strömungsgleichrichtern dargestellt, die sich durch die Längen der ersten Leitelemente 11 und der zweiten Leitelemente 13, durch die Winkel der Leitelemente gegenüber der Achse 12 und durch die Anzahl der Leitelemente unterscheiden. Die Figur 9 zeigt in einem Querschnitt und in einer Sternansicht einen Strömungsgleichrichter 10, bei dem das erste Leitelement 11 zylindrisch mit einer Wandung parallel zu der Achse 12 ausgerichtet ist. Das zweite Leitelement 13 ist, wie zu Figur 4 beschrieben, in axialer Erstreckung der Achse 12 länger als das erste Leitelement 11. Die Wandung des zweiten Leitelements 13 ist parallel zu der Wandung des Zulaufkonus 2 orientiert.

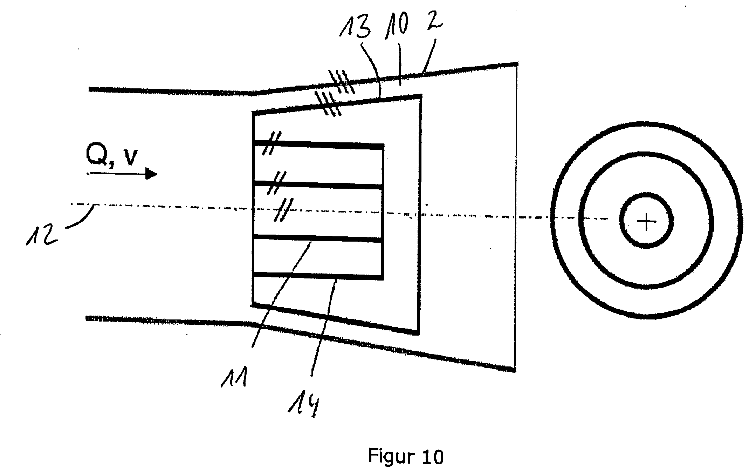

In der Figur 10 ist das erste Leitelement 11 wie in Figur 9 parallel zu der Achse 12. Das zweite Leitelement 13 ist ebenfalls wie in Figur 9 länger als das erste Leitelement 11 (in stromabwärtiger Richtung) und parallel zu der Wandung des Zulaufkonus 2 ausgerichtet. Ein drittes Leitelement 14 ist zwischen dem ersten Leitelement 11 und dem zweiten Leitelement 13 angeordnet. Das dritte Leitelement 14 ist rohrförmig und koaxial zu dem ersten Leitelement 11 angeordnet. Seine Wandung verläuft parallel zu der Achse 12. Der runde freie innere Querschnitt ist über die Längserstreckung konstant.

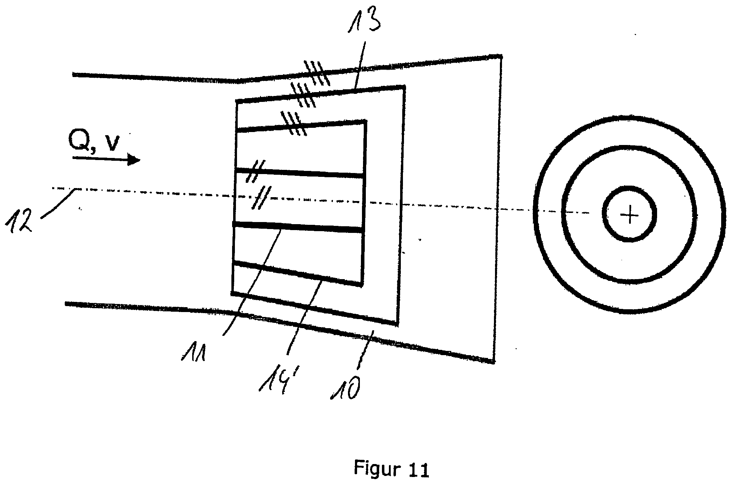

Die Figur 11 zeigt einen Strömungsgleichrichter 10 mit dem ersten Leitelement 11 und dem zweiten Leitelement 13 entsprechend Figur 10. Zwischen dem ersten Leitelement 11 und dem zweiten Leitelement 13 ist ein drittes Leitelement 14' vorgesehen. Das Leitelement 14' ist als kegelstumpfförmiges Rohr ausgebildet und koaxial zu dem ersten Leitelement 11 und der Achse 12 ausgerichtet. Die Wandung des dritten Leitelements 14' verläuft parallel zu der Wandung des zweiten Leitelements 13. In Axialrichtung ist die Längserstreckung des dritten Leitelements 14' gleich der Längserstreckung des ersten Leitelements 11. Alle Leitelemente liegen mit ihrer Anströmseite in der gleichen Ebene.

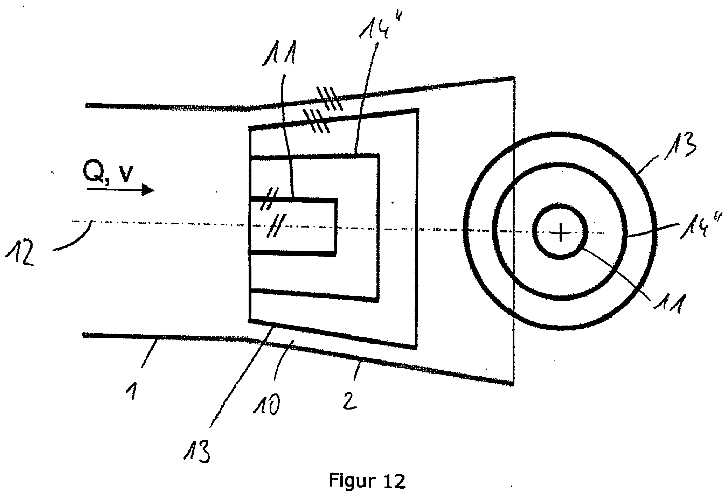

Die Figur 12 zeigt einen Strömungsgleichrichter 10 mit dem ersten Leitelement 11 und dem zweiten Leitelement 13 sowie einem dazwischen angeordnetem dritten Leitelement 14". Das dritte Leitelement 14" ist als konisches Rohr kegelstumpfförmig aufgebaut und koaxial zu dem ersten Leitelement 11 angeordnet. Der Öffnungsquerschnitt in der Anströmseite liegt in der gleichen Ebene wie die Anströmseiten des ersten Leitelements 11 und des zweiten Leitelements 13. Die Wandung verläuft in einem Winkel gegenüber der Achse 12, der kleiner ist als der Winkel der Wandung des zweiten Leitelements 13, aber größer als Null. Die Wandung des dritten Leitelements 14" verläuft etwa in der Winkelhalbierenden zwischen den Wandungen des ersten Leitelements 11 und des zweiten Leitelements 13. In Axialrichtung stromabwärts liegt das freie Ende des dritten Leitelements 14" zwischen dem Ende des ersten Leitelements 11 und dem Ende des zweiten Leitelements 13.

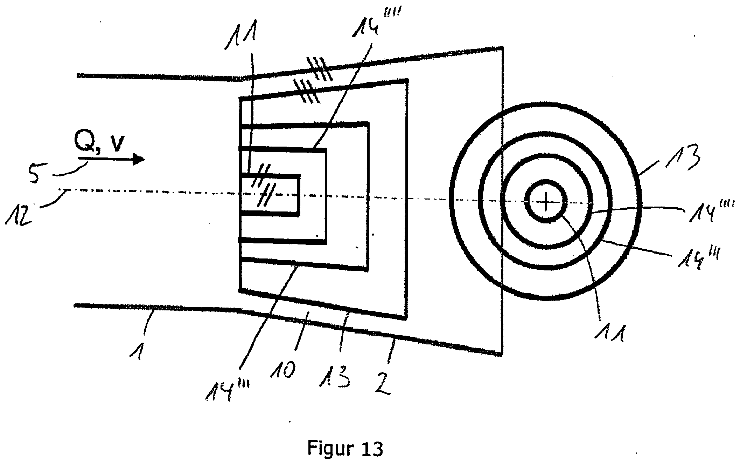

Die Figur 13 zeigt einen Strömungsgleichrichter 10 in einem Zulaufkonus 2. Der Strömungsgleichrichter umfasst das erste Leitelement 11 mit einer Wandung parallel zu der Achse 12 sowie das zweite Leitelement 13 mit einer Wandung parallel zur Wandung des Zulaufkonus 2. Zwischen den beiden Leitelementen 11 und 13 sind ein drittes Leitelement 14"' und ein viertes Leitelement 14"" vorgesehen. Das dritte Leitelement 14'" ist in Axialrichtung kürzer als das zweite Leitelement 13, aber länger als das vierte Leitelement 14"". Das vierte Leitelement 14"" ist wiederum länger als das erste Leitelement 11. Die Stirnseiten in Anströmrichtung liegen in einer Ebene. Die stromabwärtigen Stirnseiten der Leitelemente sind gestaffelt.

Während das erste Leitelement 11 wie bei den anderen Ausführungsformen zylindrisch ist, sind das dritte Leitelement 14'" und das vierte Leitelement 14"" mit kegelstumpfförmigen Wandungen versehen. Die Neigungswinkel der Wandungen gegenüber der Achse 12 liegen zwischen dem Neigungswinkel der konischen Wandung des zweiten Leitelements 13 und dem Winkel Null, der durch die Achse 12 und die dazu parallele Wandung des ersten Leitelements 11 definiert ist. Dabei ist der Öffnungswinkel des dritten Leitelements 14'" größer als derjenige des vierten Leitelements 14"", aber kleiner als derjenige des zweiten Leitelements 13.
In Abwandlungen ist vorgesehen, dass mehrere Leitelemente zwischen dem ersten und dem zweiten Leitelement angeordnet sind. Dabei ist bevorzugt der Neigungswinkel der konischen Wandung umso größer, je größer der Abstand der Wandung von der Achse 12 ist. Entsprechendes gilt für die Leitelemente mit nicht rundem Querschnitt, also für Ausführungsformen, deren stromabwärtiges Ende rechteckig, quadratisch oder mit abgerundeten Ecken versehen ist, siehe Figuren 5, 7 und 8.

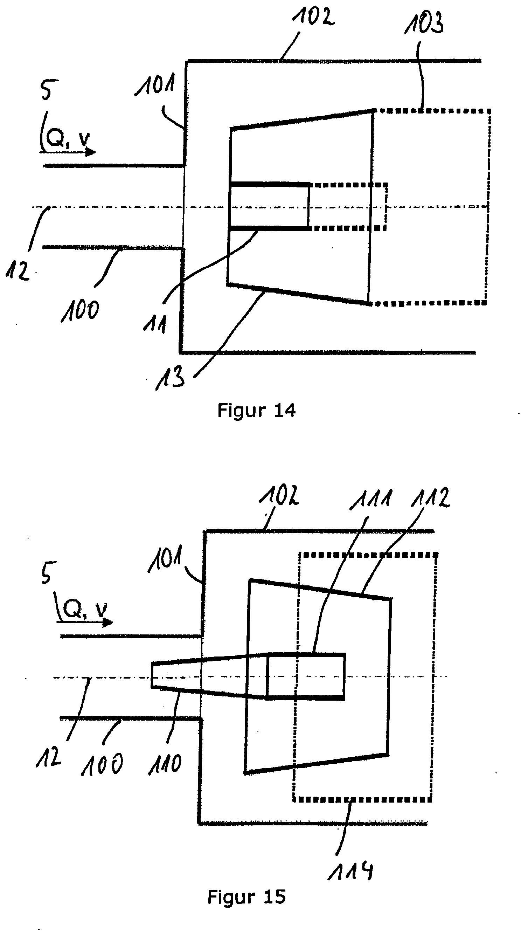

Die Figur 14 zeigt eine weitere, nicht erfindungsgemäße, Ausführung. Ein Kanal 100 mit konstantem, kreisförmigen Durchmesser erweitert sich im Bereich einer Stufe 101 übergangslos zu einem zylindrischem Bereich 102, in dem der Strömungsgleichrichter mit dem inneren Leitelement 11 und dem äußeren Leitelement 13 angeordnet ist. In einer weiteren Variante, die mit gestrichelten Linien dargestellt ist, ist das erste Leitelement 11 über den Bereich des zweiten Leitelements 13 hinaus verlängert. Das zweite Leitelement 13 ist durch Ansatz eines zylindrischen Leitelements 103 in Strömungsrichtung verlängert, wobei das Leitelement 103 den Durchmesser des größeren Endes des zweiten Leitelements 13 aufweist.

Die Figur 15 zeigt weitere, nicht erfindungsgemäße, Ausführungsform. Der Kanal ist stufenförmig wie in Figur 14 ausgebildet. Ein inneres Leitelement 110 ist konisch ausgebildet mit stromaufwärts liegendem Ende kleineren Durchmessers und einem stromabwärts liegenden Ende größeren Durchmessers. An das stromabwärts liegende Ende schließt ein zylindrisches rohrförmiges Leitelement 111 an. Ein zweites Leitelement 112 ist ebenfalls konisch ausgebildet, jedoch mit dem größeren Durchmesser stromaufwärts und dem kleineren Durchmesser stromabwärts. Das stromaufwärtige Ende liegt in Strömungsrichtung vor dem Übergang des ersten Leitelements 110 in das Leitelement 111. Das stromabwärtige Ende des Leitelements 112 liegt stromabwärts des Leitelements 111. Eine Variante ist mit gestrichelten Linien dargestellt. In dieser Variante ist ein zusätzliches zylindrisches Leitelement 114 vorgesehen, dass über seine Längserstreckung einen konstanten Durchmesser aufweist. Das stromaufwärtige Ende des Leitelements 114, welches das Leitelement 112 konzentrisch umgibt, ist zwischen dem stromaufwärtigen Ende und dem stromabwärtigen Ende des Leitelements 112 angeordnet, während das stromabwärtige Ende des Leitelements 114 in Strömungsrichtung hinter dem Leitelement 112 liegt.

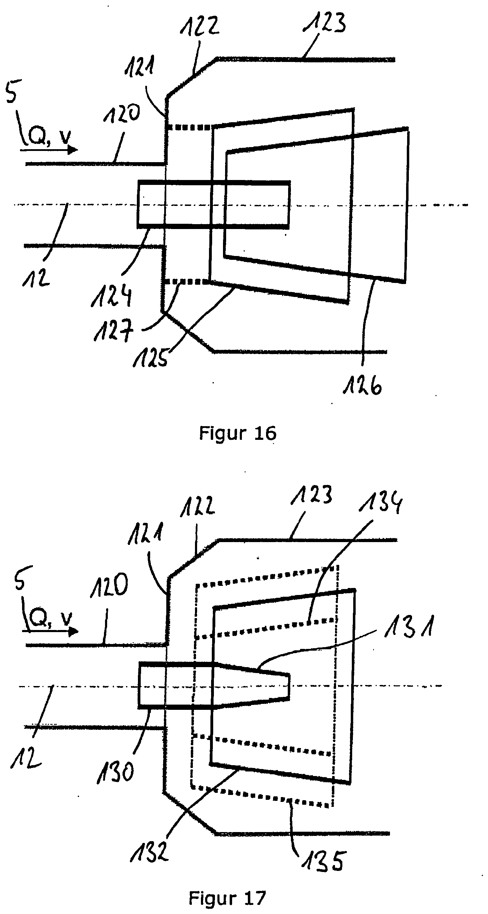

In der Figur 16 ist eine nicht erfindungsgemäße Ausführungsform dargestellt. Ein einlaufender rohrförmiger Kanal 120 mit konstantem Durchmesser erweitert sich im Radius in einer Stufe 121 übergangslos, daran schließt sich ein sich konisch erweiternder Bereich 122 an, der schließlich in einen größeren zylindrischen Abschnitt 123 übergeht. Im Innern des so gebildeten Kanals befindet sich konzentrisch zu der Achse 12 ein erstes Leitelement 124, das rohrförmig mit konstantem Durchmesser ausgebildet ist. Das stromaufwärtige Ende des Leitelements 124 liegt noch innerhalb des Kanals 120, während das stromabwärtige Ende bis in den Bereich des Abschnitts 123 reicht. Ein zweites Leitelement 125 ist als konisches, rohrförmiges Element ausgebildet. Das stromaufwärtige Ende ist mit dem kleineren Durchmesser versehen und beginnt an dem Übergang des Bereichs 122 in dem Bereich 123. Das stromabwärtige Ende größeren Durchmessers liegt in dem Bereich 123, und zwar stromabwärts des ersten Leitelements 124. Ein drittes Leitelement 126 ist in Radialrichtung zwischen dem ersten Leitelement 124 und dem zweiten Leitelement 125 angeordnet. Das Leitelement 126 ist konisch ausgebildet. Der stromaufwärtige Durchmesser ist kleiner als der stromabwärtige Durchmesser. Das stromaufwärtige Ende des Leitelements 126 liegt stromabwärts des stromaufwärtigen Ende des Leitelements 125, jedoch stromaufwärts des stromabwärtigen Endes des Leitelements 124. Das stromabwärtige Ende des Leitelements 126 liegt in Strömungsrichtung hinter dem stromabwärtigen Ende des Leitelements 125. Die konische Wandung des Leitelements 125 ist im wesentlichen parallel zu der Wandung des Leitelements 126 ausgebildet.

In einer Variante, die mit gestrichelter Linie dargestellt ist, ist das Leitelement 125 an seinem stromaufwärtigen Ende mit einem zylindrischen Rohr 127 verbunden, das an dem Bereich 121 des Kanals befestigt ist.

Die Figur 17 zeigt eine weitere Ausführungsform, die nicht erfindungsgemäß ist. Ein erstes Leitelement 130 ist rohrförmig ausgebildet mit einem stromaufwärtigen Ende, welches innerhalb des Kanals 120 liegt. Von dem stromaufwärtigen Ende aus ist das Leitelement 130 in stromabwärtiger Richtung zunächst mit konstantem Durchmesser ausgebildet. In dem Übergangsbereich zwischen dem Abschnitt 122 und dem Abschnitt 123 schließt sich an den zylindrischen Bereich des Leitelements 130 ein sich konisch verjüngender Bereich 131 an, der stromabwärts mit einem kleinerem Durchmesser endet. Das Leitelement 130 ist umgeben von einem zweiten Leitelement 132. Das Leitelement 132 ist konisch rohrförmig ausgebildet und liegt mit seinem Ende kleineren Durchmessers stromaufwärts, während das stromabwärtige Ende den größeren Durchmesser aufweist. Das stromaufwärtige Ende liegt geringfügig stromaufwärts des Übergangs zwischen den Elementen 130 und 131. das stromabwärtige Ende des Leitelements 132 liegt stromabwärts des Leitelements 131. Varianten dieser Ausführungsform sind mit gestrichelten Linien dargestellt. Ein konisches Leitelement 134 ist konzentrisch zwischen den Leitelementen 130 und 132 angeordnet. Es beginnt stromaufwärts vor dem Leitelement 132 und endet mit seinem stromabwärtigen Ende zwischen dem Leitelement 131 und dem Leitelement 132. Der stromaufwärtige Durchmesser ist kleiner als der stromabwärtige Durchmesser. Die Wandung verläuft etwa parallel zu derjenigen des Leitelements 132. Ein weiteres Leitelement 135 kann vorgesehen sein, welches das Leitelement 132 radial außen liegend umgibt. Das Leitelement 135 ist ebenfalls konisch ausgebildet und liegt mit seinem kleineren Durchmesser in der Ebene des stromaufwärtigen Endes des Leitelements 134. Das stromabwärtige Ende liegt in einer Ebene mit dem stromabwärtigen Ende des Leitelements 134. Der Durchmesser des Leitelements 135 ist größer als derjenige des Leitelements 132, so dass das Leitelement 135 in Radialrichtung der Anordnung zwischen dem Leitelement 132 und der Wandung 123 liegt.

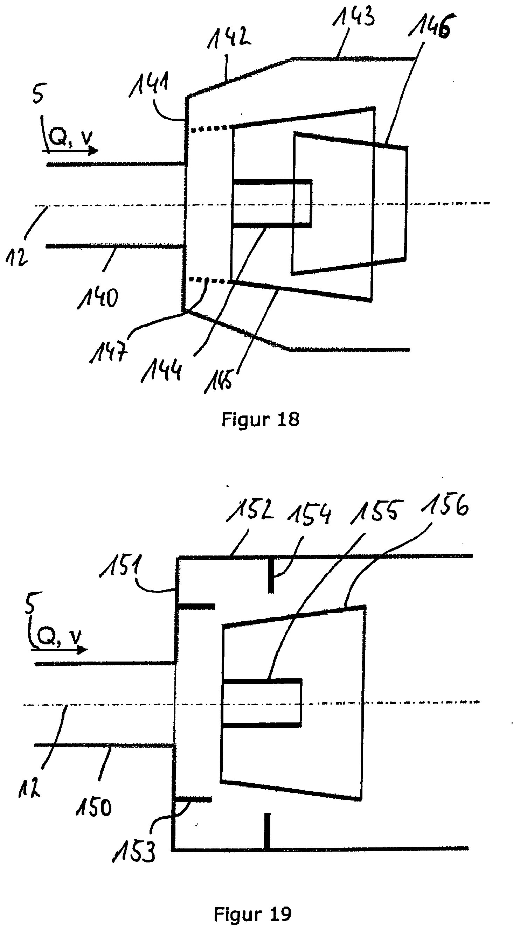

Die Figur 18 zeigt eine nicht erfindungsgemäße Ausführungsform. Ein rohrförmiger Kanal 140 geht mit einem radialen Abschnitt 141 stufenförmig in einen konischen, sich erweiternden Abschnitt 142 über, der schließlich an einem zylindrischen Abschnitt 143 größeren Durchmessers anschließt.
Ein erstes kreiszylindrisches Leitelement 144 beginnt in Strömungsrichtung im Bereich des sich konisch erweiternden Abschnitts 142 und endet in dem zylindrischen Abschnitt 143. Ein zweites Leitelement 145 umgibt das Leitelement 144 konzentrisch. Es ist konisch ausgebildet, wobei der kleinere Durchmesser stromaufwärts und der größere Durchmesser stromabwärts angeordnet ist. Das stromaufwärtige Ende des Leitelements 145 liegt in einer Radialebene mit dem stromaufwärtigen Ende des Leitelements 144. Das stromabwärtige Ende des Leitelements 145 liegt stromabwärts in einem Abstand von dem stromabwärtigen Ende des Leitelements 144. Ein drittes Leitelement 146 ist konzentrisch zwischen dem ersten Leitelement 144 und dem zweiten Leitelement 145 angeordnet. Das dritte Leitelement 146 verjüngt sich in Strömungsrichtung von einem stromaufwärtigen größeren Durchmesser zu einem stromabwärtigen kleineren Durchmesser. Das stromaufwärtige Ende liegt vor dem stromabwärtigen Ende des Leitelements 144, während das stromabwärtige Ende des Leitelements 146 in Strömungsrichtung hinter dem stromabwärtigen Ende des Leitelements 145 liegt. In einer Variante, die mit gestrichelten Linien dargestellt ist, ist das Leitelement 145 über ein konisches Verbindungsrohr 147 an den radialen Abschnitt 141 des Kanals angefügt.

Die Figur 19 zeigt eine nicht erfindungsgemäße Ausführungsform. Ein rohrförmiger Kanal 150 mit konstantem Durchmesser geht über einen radialen Abschnitt 151 stufenförmig in einen Abschnitt 152 größeren Durchmessers über. Der Abschnitt 151 ist mit einem konzentrisch zu der Achse 12 angeordneten Ring 153 versehen, der sich in den Innenraum des Kanals erstreckt und dort frei endet. Ein weiterer Ring 154, der kreisscheibenförmig ausgebildet ist, ist im Bereich des Wandungsabschnitts 152 in einem Abstand von dem rohrförmigen Ring 153 stromabwärts angeordnet. Der Ring 154 ist mit seiner Außenseite an der Innenseite der Wandung 152 angeordnet und reicht in Radialrichtung in den Innenraum des Kanals hinein, wobei der innere Durchmesser des Rings 154 größer ist als der äußere Durchmesser des Rings 153.
Ein erstes Leitelement 155 ist konzentrisch zu der Achse 12 im Innern des Abschnitts 152 etwa auf Höhe des zweiten Rings 154 angeordnet. Das Leitelement 155 ist als kreiszylindrisches Rohr mit konstantem Durchmesser ausgeführt. Ein zweites Leitelement 156 umgibt das Leitelement 155 konzentrisch. Es ist konisch ausgebildet. Der kleinere Durchmesser liegt in stromaufwärtiger Richtung, während der größere Durchmesser in stromabwärtiger Richtung liegt. Der Außendurchmesser des zweiten Leitelements 156 ist kleiner als der Innendurchmesser des Rings 154. Die stromaufwärtigen Enden der Leitelemente 155 und 156 liegen in einer Radialebene zwischen den Ringen 153 und 154, während die stromabwärtigen Enden der Leitelemente 155 und 156 stromabwärts des Rings 154 liegen. Das Leitelement 156 überragt das Leitelement 155 in stromabwärtiger Richtung.

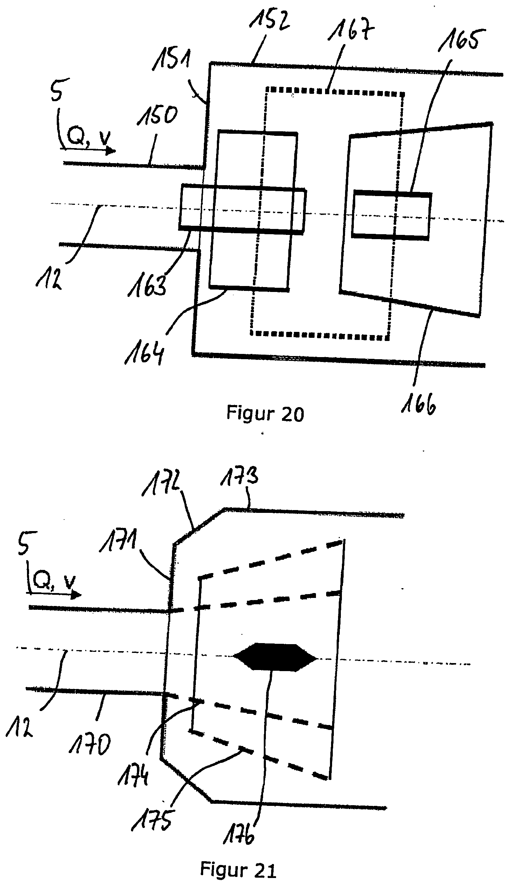

Die Figur 20 zeigt eine ebenfalls nicht erfindungsgemäße Ausführungsform. Der äußere Kanal ist mit den Abschnitten 150 bis 152 baugleich zu denjenigen aus Figur 19. Ein erstes Leitelement 163 ist konzentrisch zu der Achse 12 angeordnet. Das Leitelement 163 ist rohrförmig mit konstantem Innendurchmesser ausgebildet. Sein stromaufwärtiges Ende liegt innerhalb des Abschnitts 150, während das stromabwärtige Ende im Bereich des Abschnitts 152 liegt. Ein zweites Leitelement 164 umgibt das Leitelement 163 konzentrisch. Es ist ebenfalls als Rohr mit konstantem Durchmesser ausgeführt. Der Durchmesser des Leitelements 164 ist etwa viermal so groß wie der Durchmesser des Leitelements 163. Der Durchmesser des Leitelements 164 liegt zwischen dem Durchmesser des Abschnitts 150 und dem Durchmesser des Abschnitts 152 der äußeren Kanalwandung. Das stromaufwärtige Ende des Leitelements 164 liegt hinter dem stromaufwärtigen Ende des Leitelements 163. Das stromabwärtige Ende des Leitelements 164 liegt stromaufwärts des in Strömungsrichtung hinteren Endes des Leitelements 163. Ein drittes Leitelement 165 ist kozentrisch zu der Achse 12 stromabwärts des Leitelements 163 und mit einem Abstand zu dem Leitelement 163 angeordnet. Es ist als rohrförmiges Leitelement mit konstantem Durchmesser ausgeführt. Der Durchmesser entspricht denjenigen des Leitelements 163. In Axialrichtung der Achse 12 ist das Leitelement 165 kürzer als das Leitelement 163 und etwa gleich lang wie das Leitelement 164 ausgebildet. Ein viertes Leitelement 166 umgibt das Leitelement 165 konzentrisch. Das Leitelement 166 ist kegelstumpfförmig ausgebildet, wobei das stromaufwärtige Ende den kleineren Durchmesser und das stromabwärtige Ende den größeren Durchmesser aufweist. Das stromaufwärtige Ende liegt zwischen den Leitelementen 163 und 165, während das stromabwärtige Ende des Leitelements 166 hinter dem stromabwärtigen Ende des Leitelements 165 liegt. Der kleinere Durchmesser des Leitelements 166 liegt in stromaufwärtiger Richtung. Er ist etwa so groß wie der Durchmesser des zylindrischen Leitelements 164. Eine Variante der sechzehnten Ausführungsform ist in der Figur 20 mit gestrichelten Linien dargestellt. Ein fünftes Leitelement 167 umgibt die Leitelemente 164 und 166 in der Weise, dass es einen größeren Außendurchmesser als diese Leitelemente aufweist und in Axialrichtung teilweise mit beiden Leitelementen überlappt, so dass das Leitelement 167 den Zwischenraum zwischen den Leitelementen 164 und 166 umschließt. Das Leitelement 167 ist rohrförmig mit konstantem Durchmesser ausgebildet und parallel und koaxial zu der Achse 12 ausgerichtet. Das stromaufwärtige Ende des Leitelements 167 liegt zwischen dem stromaufwärtigen und dem stromabwärtigen Ende des Leitelements 164. Das stromabwärtige des Leitelements 167 liegt zwischen dem stromaufwärtigen Ende und dem stromabwärtigen Ende der Leitelemente 165 und 166.

Die Figur 21 zeigt schließlich ein letztes nicht erfindungsgemäßes Ausführungsbeispiel. Ein Kanal 170 mit zylindrischem, konstantem Durchmesser geht in einem radialen scheibenförmigen Abschnitt 171 stufenförmig in einen größeren Durchmesser über. An den Abschnitt 171 schließt sich ein konischer Abschnitt 172 an, der sich weiter zu einem größeren Durchmesser in stromabwärtiger Richtung erweitert und der dann an einen zylindrischen, rohrförmigen Abschnitt 173 anschließt. Im Innern ist ein erstes Leitelement 174 angeordnet, wobei gestrichelte Linien bei dieser Ausführungsform Lochbleche veranschaulichen sollen. Das Leitelement 164 ist als konusförmiges Rohr ausgebildet, welches mit dem stromaufwärtigen Ende kleineren Durchmessers unmittelbar an den Abschnitt 170 anschließt und sich zu einem stromabwärts liegenden Ende größeren Durchmessers erstreckt. Das Leitelement 174 ist konzentrisch von einem zweiten Leitelement 175 umgeben, welches ebenfalls aus einem Lochblech gefertigt ist. Das Leitelement 175 ist konusförmig ausgebildet und im Durchmesser größer als das Leitelement 174 ausgestaltet. Das stromaufwärtige Ende kleineren Durchmessers liegt in einem Abstand von dem Abschnitt 171 stromabwärts. Das stromabwärtige größere Ende des Leitelements 175 liegt in einer Radialebene mit dem stromabwärtigen Ende des Leitelements 174. Innerhalb des Überlappungsbereichs der Leitelemente 174 und 175 ist mittig und symmetrisch zu der Achse 12 ein Stromkörper 176 angeordnet, der die Strömung in diesem Bereich beeinflusst.
Während bei den soweit beschriebenen Ausführungsformen in den Figuren 14 bis 21 stets im Querschnitt runde Leitelemente beschrieben wurden, können diese in Anpassung an die Ausführungen zu den Figuren 3 und 5 auch quadratisch, rechteckig oder mit abgerundeten Ecken versehen sein. Insbesondere können die Wandungen der Leitelemente aus einem durchgehenden Stahlblech gefertigt sein. Sie können aber auch, wie in der Figur 21 angedeutet, aus einem Lochblech gefertigt sein, wobei das Lochblech parallele Schlitze, dreieckige Ausnehmungen oder elliptische Ausnehmungen aufweisen kann.
Weiter können die insoweit beschriebenen Vorrichtungen auch zur Vergleichmäßigung von Strömungsprofilen in Rohren eingesetzt werden, die keinen sprunghaft oder kontinuierlich ansteigenden Innendurchmesser aufweisen, sondern die einen konstanten Durchmesser aufweisen. Schließlich sind die Vorrichtungen auch in umgekehrter Strömungsrichtung einsetzbar, also beispielsweise in den Figuren 14 bis 21 mit Strömungsrichtung von rechts nach links. Der Kanal verengt sich dann von einem größeren auf einen kleineren Durchmesser.

In der Praxis ergibt sich durch den Einsatz der insoweit beschriebenen Strömungsgleichrichter eine Vergleichmäßigung der Geschwindigkeiten der Strömungspfade, die sich in dem UV-Reaktor 3 vor den UV-Strahlern 6 ausbilden. Gegenüber der unbeeinflussten Strömung werden die schnellen Strömungspfade verlangsamt, während die langsamen Strömungspfade beschleunigt werden. Dadurch ergibt sich eine gleichmäßigere Bestrahlung des Flüssigkeitsstroms. Jedes Flüssigkeitsvolumenelement erhält beim Durchtritt durch den UV-Reaktor die gleiche UV-Dosis. Die Unterschiede werden in jedem Fall verringert. Dadurch kann die elektrische Leistung, mit der der UV-Reaktor beaufschlagt wird, bei gleichem Volumenstrom verringert werden.

## Patentansprüche

1. Kanal für eine UV-Bestrahlungseinrichtung, bei dem die UV-Bestrahlungseinrichtung (6) in einem geschlossenen Kanal (1) angeordnet ist, wobei in dem Kanal (1) vor der UV-Bestrahlungseinrichtung (6) ein Strömungsgleichrichter (10) mit wenigstens einem inneren ersten Leitelement (11) und wenigstens einem äußeren zweiten Leitelement (13) angeordnet ist, wobei das äußere Leitelement (13) in einem Abstand zu der Außenwand angeordnet ist **dadurch gekennzeichnet, dass** in Strömungsrichtung vor einem UV-Reaktor (6) ein Zulaufkonus (2) vorgesehen ist, dass der Strömungsgleichrichter (10) in dem Zulaufkonus (2) angeordnet ist, und dass das innere Leitelement (11) ein im wesentlichen kreiszylindrisches Rohr ist und das äußere Leitelement (13) im wesentlichen parallel zu der Außenwand verläuft.

2. Kanal nach Anspruch 1, **dadurch gekennzeichnet, dass** der Zulaufkonus (2) als Teil der Wandung des Kanals den Querschnitt des Kanals von einem einlaufenden Rohrleitungsquerschnitt auf einen Querschnitt des Reaktors verändert.

3. Kanal nach einem der vorhergehenden Ansprüche, **dadurch gekennzeichnet, dass** der Zulaufkonus (2) als Teil der Wandung des Kanals den Querschnitt des Kanals (1) von einem einlaufenden Rohrleitungsquerschnitt auf einen Querschnitt des Reaktors (3) vergrößert.

4. Kanal nach einem der vorhergehenden Ansprüche, **dadurch gekennzeichnet, dass** der Zulaufkonus (2) als Teil der Wandung des Kanals den Querschnitt des Kanals (1) von einem einlaufenden Rohrleitungsquerschnitt auf einen Querschnitt des Reaktors (3) verkleinert.

5. Kanal nach einem der vorhergehenden Ansprüche, **dadurch gekennzeichnet, dass** der Übergang von dem Kanal (1) zu dem UV-Reaktor (3) als Stufe ausgeführt ist.

6. Kanal nach einem der vorhergehenden Ansprüche, **dadurch gekennzeichnet, dass** das äußere Leitelement (13) einen kreisförmigen Querschnitt aufweist.

7. Kanal nach einem der vorhergehenden Ansprüche, **dadurch gekennzeichnet, dass** das äußere Leitelement (13) an die geometrische Form des Zulaufkonus (2) angepasst ist.

8. Kanal nach einem der vorhergehenden Ansprüche, **dadurch gekennzeichnet, dass** das äußere Leitelement (13) einen quadratischen oder rechteckigen Querschnitt mit abgerundeten Ecken (28) oder mit rechtwinkligen Ecken aufweist.

9. Kanal nach einem der vorhergehenden Ansprüche, **dadurch gekennzeichnet, dass** zwischen dem ersten Leitelement (11) und dem zweiten Leitelement (13) wenigstens ein drittes Leitelement (14 - 14'''') angeordnet ist.

10. Kanal nach einem der vorhergehenden Ansprüche, **dadurch gekennzeichnet, dass** die Wandung des dritten Leitelements (14 - 14'''') bezüglich der Symmetrieachse (12) der Anordnung in einem Winkel ausgerichtet ist, der zwischen dem ersten Leitelement (11) und dem zweiten Leitelement (13) liegt.

11. Kanal nach einem der vorhergehenden Ansprüche, **dadurch gekennzeichnet, dass** das erste Leitelement (11) in Axialrichtung (12) der Vorrichtung, die der Strömungsrichtung (5) des Wassers entspricht, kürzer ist als das zweite Leitelement (13).

12. Kanal nach einem der vorhergehenden Ansprüche, **dadurch gekennzeichnet, dass** die stromaufwärts liegenden Enden der Leitelemente (11, 13, 14 - 14'''') in einer Ebene angeordnet sind und dass die stromabwärts liegenden Enden der Leitelemente (11, 13, 14 - 14'''') in unterschiedlichen Ebenen liegen.

13. Kanal nach einem der vorhergehenden Ansprüche, **dadurch gekennzeichnet, dass** die axiale Erstreckung der Leitelemente (11, 13, 14 - 14'''') gleich lang ist.

## Claims

1. Channel for a UV irradiation device in which the UV irradiation device (6) is arranged in a closed channel (1), wherein a flow straightener (10) is arranged in the channel (1) before the UV irradiation device (6) with at least one inner first guide element (11) and at least one outer second guide element (13), wherein the outer guide element (13) is arranged at a distance from the outer wall, **characterised in that** an inflow cone (2) is provided in the flow direction before a UV reactor (6), **in that** the flow straightener (10) is arranged in the inflow cone (2) and **in that** the inner guide element (11) is a substantially circular cylindrical pipe and the outer guide element (13) runs substantially parallel to the outer wall.

2. Channel according to claim 1, **characterised in that** the inflow cone (2), as part of the wall of the channel, changes the cross-section of the channel from an inflowing pipeline cross-section to a cross-section of the reactor.

3. Channel according to any one of the preceding claims, **characterised in that** the inflow cone (2), as part of the wall of the channel, increases the cross-section of the channel (1) from an inflowing pipeline cross-section to a cross-section of the reactor (3).

4. Channel according to any one of the preceding claims, **characterised in that** the inflow cone (2), as part of the wall of the channel, reduces the cross-section of the channel (1) from an inflowing pipeline cross-section to a cross-section of the reactor (3).

5. Channel according to any one of the preceding claims, **characterised in that** the transition from the channel (1) to the UV reactor (3) is designed as a step.

6. Channel according to any one of the preceding claims, **characterised in that** the outer guide element (13) has a circular cross-section.

7. Channel according to any one of the preceding claims, **characterised in that** the outer guide element (13) is adapted to the geometric shape of the inflow cone (2).

8. Channel according to any one of the preceding claims, **characterised in that** the outer guide element (13) has a square or rectangular cross-section with rounded corners (28) or with right-angled corners.

9. Channel according to any one of the preceding claims, **characterised in that** at least one third guide element (14 - 14"") is arranged between the first guide element (11) and the second guide element (13).

10. Channel according to any one of the preceding claims, **characterised in that** the wall of the third guide element (14 - 14"") is aligned at an angle in relation to the symmetry axis (12) of the arrangement, said angle being between the first guide element (11) and the second guide element (13).

11. Channel according to any one of the preceding claims, **characterised in that** the first guide element (11) in the axial direction (12) of the device corresponding to the flow direction (5) of the water is shorter than the second guide element (13).

12. Channel according to any one of the preceding claims, **characterised in that** the ends of the guide elements (11, 13, 14 - 14"") located upstream are arranged in one plane and **in that** the ends of the guide elements (11, 13, 14 - 14"") located downstream are located in different planes.

13. Channel according to any one of the preceding claims, **characterised in that** the axial extension of the guide elements (11, 13, 14 - 14"") is equally long.

## Revendications

1. Canal pour un dispositif d'irradiation de rayons UV, où le dispositif d'irradiation de rayons UV (6) est disposé dans un canal fermé (1), où un redresseur de flux (10) avec au moins un premier élément de guidage interne (11) et au moins un deuxième élément de guidage externe (13) est disposé dans le canal (1) en amont du dispositif d'irradiation de rayons UV, où l'élément de guidage externe (13) est disposé à une certaine distance de la paroi extérieure **caractérisé en ce qu'**un cône d'entrée (2) est prévu dans la direction d'écoulement en amont d'un réacteur UV (6), le redresseur de flux (10) est disposé dans le cône d'entrée (2) et l'élément de guidage interne (11) est un conduit substantiellement en forme de cylindre circulaire et l'élément de guidage externe (13) chemine substantiellement parallèlement à la paroi extérieure.

2. Canal selon la revendication 1, **caractérisé en ce que** le cône d'entrée (2), en tant que partie de la paroi du canal, modifie la section transversale du canal d'une section transversale de conduite entrante en section transversale du réacteur.

3. Canal selon l'une des revendications ci-dessus, **caractérisé en ce que** le cône d'entrée (2), en tant que partie de la paroi du canal, agrandit la section transversale du canal (1) d'une section transversale de conduite entrante en section transversale du réacteur (3).

4. Canal selon l'une des revendications ci-dessus, **caractérisé en ce que** le cône d'entrée (2), en tant que partie de la paroi du canal, rétrécit la section transversale du canal (1) d'une section transversale de conduite entrante en section transversale du réacteur (3).

5. Canal selon l'une des revendications ci-dessus, **caractérisé en ce que** le passage du canal (1) au réacteur UV (3) comporte un niveau.

6. Canal selon l'une des revendications ci-dessus, **caractérisé en ce que** l'élément de guidage extérieur (13) présente une section transversale circulaire.

7. Canal selon l'une des revendications ci-dessus, **caractérisé en ce que** l'élément de guidage externe (13) est adapté à la forme géométrique du cône (2).

8. Canal selon l'une des revendications ci-dessus, **caractérisé en ce que** l'élément de guidage externe (13) présente une section carrée ou rectangulaire avec des angles arrondis (28) ou des angles droits.

9. Canal selon l'une des revendications ci-dessus, **caractérisé en ce que** au moins un troisième élément de guidage (14 - 14"") est disposé entre le premier élément de guidage (11) et le deuxième élément de guidage (13).

10. Canal selon l'une des revendications ci-dessus, **caractérisé en ce que** la paroi du troisième élément de guidage (14 - 14"") est orientée, par rapport à l'axe symétrique (12) de la disposition, dans un angle qui se situe entre le premier élément de guidage (11) et le deuxième élément de guidage (13).

11. Canal selon l'une des revendications ci-dessus, **caractérisé en ce que** le premier élément de guidage (11) dans le sens axial (12) du dispositif, qui correspond au sens d'écoulement (5) de l'eau, est plus petit que le deuxième élément de guidage (13).

12. Canal selon l'une des revendications ci-dessus, **caractérisé en ce que** les extrémités en amont des éléments de guidage (11, 13, 14 - 14"") sont disposées dans un plan et les extrémités en aval des éléments de guidage (11, 13, 14 - 14"") dans des plans différents.

13. Canal selon l'une des revendications ci-dessus, **caractérisé en ce que** l'étendue axiale des éléments de guidage (11, 13, 14 - 14"") a la même longueur.
